(19) **Europäisches Patentamt / European Patent Office / Office européen des brevets**

(11) **EP 1 679 527 B1**

(12) **EUROPÄISCHE PATENTSCHRIFT**

(45) Veröffentlichungstag und Bekanntmachung des Hinweises auf die Patenterteilung:
**11.02.2009  Patentblatt 2009/07**

(51) Int Cl.:
**G01S 17/10** *(2006.01)*  **G01S 17/08** *(2006.01)*

(21) Anmeldenummer: **05111414.8**

(22) Anmeldetag: **29.11.2005**

(54) **Impuls-Laserdistanzhandmessgerät**

Handheld impulse laser distance measuring device

Dispositif portatif de mesure de distance au laser par impulsions

(84) Benannte Vertragsstaaten:
**AT CH FR GB IT LI**

(30) Priorität: **16.12.2004  DE 102004060622**

(43) Veröffentlichungstag der Anmeldung:
**12.07.2006  Patentblatt 2006/28**

(73) Patentinhaber: **HILTI Aktiengesellschaft
9494 Schaan (LI)**

(72) Erfinder:
- **Gogolla, Torsten
  9494 Schaan (LI)**
- **Winter, Andreas
  6830 Rankweil (AT)**
- **Seifert, Helmut
  07616 Serba (DE)**

(74) Vertreter: **Wildi, Roland
Hilti Aktiengesellschaft,
Corporate Intellectual Property,
Feldkircherstrasse 100,
Postfach 333
9494 Schaan (LI)**

(56) Entgegenhaltungen:
| | |
|---|---|
| WO-A-00/72748 | WO-A-03/103794 |
| DE-A1- 3 103 567 | DE-A1- 3 429 062 |
| DE-A1- 4 141 468 | FR-A- 2 731 522 |
| US-A- 3 497 301 | US-A- 4 553 836 |
| US-A1- 2004 085 526 | |

**Beschreibung**

Die Erfindung bezeichnet ein Impuls-Laserdistanzhandmessgerät, insbesondere ein Baulaserdistanzhandmessgerät.

Im Baugewerbe ist im Entfernungsbereich bis zu einigen 100m die exakte Bestimmung der Distanz mit einer Genauigkeit von wenigen mm erforderlich. Die dazu geeignet ausgebildeten Laserdistanzhandmessgeräte, auf welche sich diese Erfindung bezieht, verwenden zur Distanzmessung ein Impulsmessverfahren eines modulierten sichtbaren Laserstrahls. Künstliche Lichtquellen, die mit 50-Hz-Wechselstrom betrieben werden, oszillieren in ihrer Intensität mit einer Frequenz $f_{STÖR}$ von 100 Hz bzw. bei 60-Hz-Wechselstrom mit einer Frequenz $f_{STÖR}$ von 120 Hz. Da das Intensitätsmaximum sowohl beim positiven als auch beim negativen Maximum des Wechselstroms auftritt, kommt es zu dieser Frequenzverdopplung. Dieser Wechselanteil der Frequenz $f_{STÖR}$ wird als Störsignal neben den Messlichtimpulsen und Referenzlichtimpulsen zusätzlich von der Fotodiode detektiert und vom Analog-Digital-Wandler abgetastet. Er führt zu Messfehlern bei der Distanzmessung.

Nach der FR2731522 ist ein optoelektronisches Laserdistanzmessgerät für sehbehinderte Menschen bekannt, welches auf einem aktiven Triangulationsmessverfahren basiert und eine detektierte Annäherung an ein Hindernis akustisch signalisiert.

Nach der US4553836 ist ein optoelektronisches Laserdistanzmessgerät bekannt, welches auf einem direkten Laufzeitmessmessverfahren für Lichtimpulse basiert.

In der DE3103567C2 wird ein Verfahren zur direkten Lichtimpulslaufzeitmessung vorgestellt, bei dem sowohl ein über die Messstrecke laufender Messlichtimpuls als auch ein über die Referenzstrecke laufender Referenzlichtimpuls von einem gemeinsamen Fotodetektor detektiert werden. Der detektierte Mess- und Referenzlichtimpuls startet bzw. stoppt ein Zeitmesssystem, also z.B. einen schnellen Zähler. Durch direkte und eindeutige Messung der Zeitdifferenz zwischen der Detektion des Referenzlichtimpulses und der Detektion des Messlichtimpulses wird die Messdistanz eindeutig ermittelt.

Nach der DE3429062C2 weist eine derartige Vorrichtung zur Messung der Laufzeit von Lichtwellen ein Überlagerungsmodul auf, in dem getriggerte Einzelmessungen mit Messlichtimpulsen und Referenzlichtimpulsen periodisch überlagert und somit aufakkumuliert werden.

Nach der DE10112833C1 ist ein Laserdistanzhandmessgerät mit einem Impulsrückmischverfahren bekannt. Die vom Lichtdetektor erfasste Detektionsimpulsfolge bzw. bei getrennten Lichtdetektoren, die Referenzimpulsfolge einerseits und die Messimpulsfolge andererseits werden vorzugsweise im jeweiligen Lichtdetektor unmittelbar einer Direktmischung mit anschließender Tiefpassfilterung unterworfen, wobei die Direktmischung unter Steuerung durch eine am Messort lokal erzeugte LO-Impulsfolge erfolgt, deren Tastverhältnis gleich oder annähernd gleich dem Tastverhältnis der Messimpulsfolge und deren Wiederholfrequenzen geringfügig verschieden gewählt sind. Die Mischimpulswiederholfrequenz $f_{MISCH}$ der niederfrequenten Impulsfolge entspricht demnach dem Betrag der Differenz zwischen der Impulswiederholfrequenz f der Sende- bzw. Messimpulsfolge und der Impulswiederholfrequenz der Lokalozillatorimpulsfolge $f_{LO}$. Es gilt also: $f_{MISCH} = |f - f_{LO}|$. Die niederfrequente Impulsfolge besteht wie die hochfrequente Detektionsimpulsfolge aus Referenz- und Messimpulsen, deren Zeitversatz ein Mass für die Distanz ist. Bezüglich näherer Einzelheiten dazu wird der Fachmann auf dieses Dokument verwiesen und dessen Offenbarungsgehalt hiermit explizit aufgenommen.

Die Aufgabe der Erfindung besteht in einer Realisierung eines Impuls-Rückmisch-Laserdistanzhandmessgeräts mit erhöhter Störsicherheit.

Die Aufgabe wird im Wesentlichen durch die Merkmale des Anspruchs 1 gelöst. Vorteilhafte Weiterbildungen ergeben sich aus den Unteransprüchen.

So weist ein Impuls-Laserdistanzhandmessgerät mit einem, einen Mikrocontroller steuernden, Algorithmus zur Berechnung der Distanz zu einem Messobjekt über eine Zeitdifferenz zwischen einem Messimpuls und einem Referenzimpuls ein Überlagerungsmodul auf, welches die Zeitdifferenz mehrerer wiederholter Impulsfolgen aus der periodischen Überlagerung mit einer Triggerfrequenz $f_{TRIGGER}$ berechnet, welche bei einer Störfrequenz $f_{STÖR}$ = 100 Hz ... 120 Hz im Frequenzbereich

$$0.7 \cdot \frac{2}{2 \cdot m - 1} \cdot f_{STÖR} < f_{TRIGGER} < 1.3 \cdot \frac{2}{2 \cdot m - 1} \cdot f_{STÖR} \quad \text{mit} \quad m = 1, 2, 3, \cdots$$

liegt.

Das zugeordnete Messverfahren weist im Schritt vor der Berechnung der Distanz aus einer Zeitdifferenz zwischen einem Messimpuls und einem Referenzimpuls einen Überlagerungsschritt auf, welcher mehrere wiederholte Impulsfolgen mit einer Triggerfrequenz $f_{TRIGGER}$ periodisch überlagert, welche bei einer Störfrequenz $f_{STÖR}$ = 100 Hz ... 120 Hz im Frequenzbereich

$$0.7 \cdot \frac{2}{2 \cdot m - 1} \cdot f_{STÖR} < f_{TRIGGER} < 1.3 \cdot \frac{2}{2 \cdot m - 1} \cdot f_{STÖR} \quad \text{mit} \quad m = 1,2,3,\cdots$$

liegt.

Indem für die Triggerfrequenz $f_{TRIGGER}$, mit der ein Abtastzyklus der mit einer Störfrequenz $f_{STÖR}$ gestörten Impulsfolge eingeleitet wird, die Beziehung

$$f_{TRIGGER} = \frac{2}{2 \cdot m - 1} \cdot f_{STÖR} \quad \text{mit} \quad m = 1,2,3,\cdots$$

gilt, lässt sich theoretisch der Einfluss des Störsignals vollständig kompensieren. Hierdurch erhält das Störsignal bezüglich zweier aufeinander folgender Abtastzyklen sich wiederholender Impulsfolgen eine Phasenverschiebung von 180 Grad. Im Fall m = 1 ist die Triggerfrequenz doppelt so gross wie die Störfrequenz, und es wird bei einem ersten Abtastzyklus beispielsweise die positive Halbwelle des Störsignals und bei einem zweiten Abtastzyklus die negative Halbwelle des Störsignals erfasst. Durch Überlagerung beider Impulsfolgen wird das Störsignal kompensiert. Im Allgemeinen wird die Kompensation des Störsignals bei einer geradzahligen Anzahl von Überlagerungen erreicht. In der Praxis muss die obige Bedingung nicht exakt eingehalten werden, so dass eine Abweichung von $\pm 30\%$ von der optimalen Triggerfrequenz akzeptabel ist, wodurch Störungen sowohl aufgrund der europäischen Wechselstromfrequenz mit 50 Hz als auch aufgrund der amerikanischen Wechselstromfrequenz mit 60 Hz mit einer Triggerfrequenz aus dem obigen Frequenzbereich kompensierbar sind.

Vorteilhaft wird ein Impulsrückmischverfahren als Messverfahren verwendet, wobei eine durch Mischung erzeugte niederfrequente Impulsfolge mit der Mischimpulswiederholfrequenz $f_{MISCH}$ der Triggerfrequenz $f_{TRIGGER}$ oder einem ganzzahligen Vielfachen davon entspricht. Es gilt also:

$$f_{MISCH} = f_{TRIGGER} \cdot n \quad \text{mit} \quad n = 1,2,3,\cdots$$

wodurch auch beim, für hochgenaue Distanzmessungen über grosse Distanzen geeigneten, Impulsrückmischverfahren gewährleistet wird, dass sich der Signalanteil der niederfrequenten Impulsfolge bei der Mittelung der Abtastsignale phasenrichtig überlagert.

Vorteilhaft entspricht die Triggerfrequenz $f_{TRIGGER}$ der Mischimpulswiederholfrequenz $f_{MISCH}$ wodurch das Triggersignal direkt aus der niederfrequenten Impulsfolge abgeleitet werden kann.

Die Erfindung wird bezüglich eines vorteilhaften Ausführungsbeispiels näher erläutert mit:

Fig. 1 als Laserdistanzhandmessgerät mit Algorithmus

Fig. 2 als mehrfach periodisch überlagerte Impulsfolge im normierten Zeitmassstab

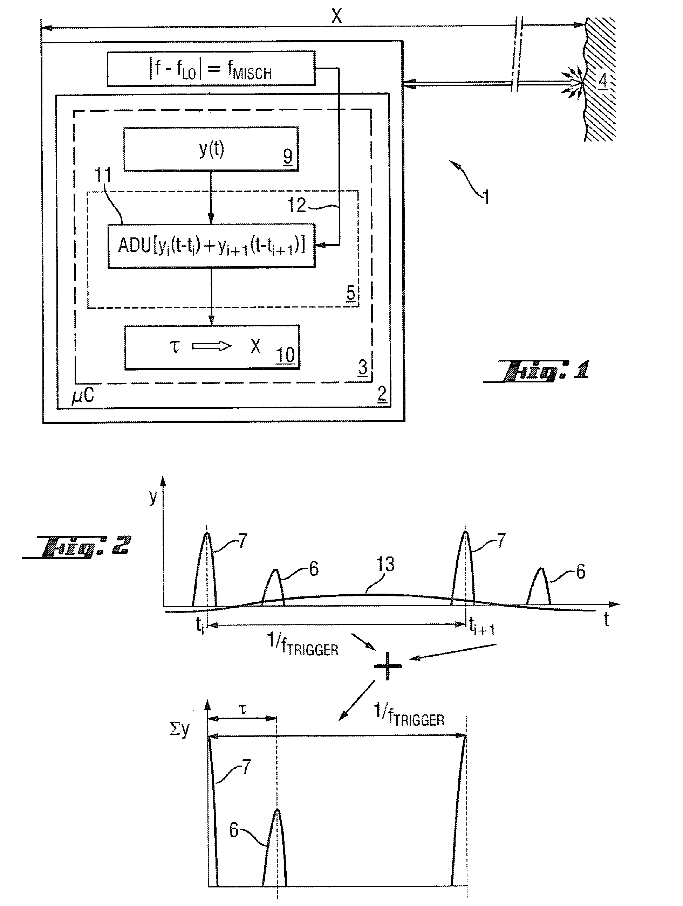

Nach den Fig. 1 und Fig. 2 weist ein nur schematisch angedeutetes Impuls-Rückmisch-Laserdistanzhandmessgerät 1 einen, einen Mikrocontroller 2 steuernden, Algorithmus 3 zur Berechnung der Distanz X zu einem Messobjekt 4 auf. In diesem Algorithmus 3 erfolgt mit einem Messschritt 9 die Messung einer zeitabhängigen Impulsfolge y(t) mit Messimpulsen 6 und Referenzimpulsen 7. In einem späteren Berechnungsschritt 10 erfolgt aus der Zeitdifferenz T zwischen dem Messimpuls 6 und dem Referenzimpuls 7 die Berechnung der Distanz X. In einem zwischen dem Messschritt 9 und dem Berechnungsschritt 10 liegenden Überlagerungsschritt 11 eines Überlagerungsmoduls 5 des Algorithmus 3 werden bei der Abtastung mit einem Analog-Digital-Wandler ADU zwei mit einer Triggerfrequenz $f_{TRIGGER}$ wiederholte, zeitlich aufeinander folgende Impulsfolgen $y_i(t-t_i)$ $y_{i+1}(t-t_{i+1})$ periodisch überlagert. Durch Mischung einer Impulswiederholfrequenz f = 100 MHz mit einer Impulswiederholfrequenz der Lokalozillatorimpulsfolge $f_{LO}$ = 100,00022 MHz im Impulsrückmischverfahren wird eine niederfrequente Mischimpulswiederholfrequenz $f_{MISCH}$ = 220 Hz erzeugt, welche zudem direkt als Triggersignal 12 verwendet wird. Dessen Triggerfrequenz $f_{TRIGGER}$ = 220 Hz liegt bei einem Index m = 1 mitten im Frequenzbereich

$$0.7 \cdot \frac{2}{2 \cdot m - 1} \cdot f_{STÖR} < f_{TRIGGER} < 1.3 \cdot \frac{2}{2 \cdot m - 1} \cdot f_{STÖR} \quad mit \quad m = 1,2,3,\cdots$$

zur Unterdrückung einer Störung 13 einer mittleren Störfrequenz $f_{STÖR}$ = 110 Hz, wie sie durch am Wechselstromnetz betriebene künstliche Lichtquellen entstehen, im aufakkumulierten Summensignal $\Sigma y$, aus dem die Zeitdifferenz $_T$ zwischen dem Messimpuls 6 und dem Referenzimpuls 7 zur Berechnung der Distanz X ermittelt wird.

## Patentansprüche

1. Impuls-Laserdistanzhandmessgerät mit einem, einen Mikrocontroller (2) steuernden, Algorithmus (3) zur Berechnung der Distanz (X) zu einem Messobjekt (4) über eine Zeitdifferenz, (T) zwischen einem Messimpuls (6) und einem Referenzimpuls (7) sowie mit einem Überlagerungsmodul (5), welches die Zeitdifferenz ($_T$) mehrerer wiederholter Impulsfolgen berechnet, die mit einer Triggerfrequenz ($f_{TRIGGER}$) periodisch überlagert werden, **dadurch gekennzeichnet, dass** zur Unterdrückung eines von mit Wechselstrom betriebenen künstlichen Lichtquellen verursachten Störsignals mit einer Störfrequenz ($f_{STOR}$) von 100 Hz bis 120 Hz die Triggerfrequenz ($f_{TRIGGER}$) im Frequenzbereich

$$0.7 \cdot \frac{2}{2 \cdot m - 1} \cdot f_{STÖR} < f_{TRIGGER} < 1.3 \cdot \frac{2}{2 \cdot m - 1} \cdot f_{STÖR} \quad mit \quad m = 1,2,3,\cdots$$

liegt.

2. Messverfahren für ein Impuls-Laserdistanzhandmessgerät (1) mit einem, von einem Mikrocontroller (2) gesteuerten, Algorithmus (3) zur Berechnung der Distanz (X) zu einem Messobjekt (4) über eine Zeitdifferenz (T) zwischen einem Messimpuls (6) und einem Referenzimpuls (5), wobei im Schritt vor der Berechnung der Distanz (X) aus der Zeitdifferenz (T) ein Überlagerungsschritt (11) vorhanden ist, welcher mehrere wiederholte Impulsfolgen periodisch mit einer Triggerfrequenz ($f_{TRIGGER}$) überlagert, **dadurch gekennzeichnet, dass** zur Unterdrückung eines von mit Wechselstrom betriebenen künstlichen Lichtquellen verursachten Störsignals mit einer Störfrequenz ($f_{STÖR}$) von 100 Hz bis 120 Hz die Triggerfrequenz ($f_{TRIGGER}$) im Frequenzbereich

$$0.7 \cdot \frac{2}{2 \cdot m - 1} \cdot f_{STÖR} < f_{TRIGGER} < 1.3 \cdot \frac{2}{2 \cdot m - 1} \cdot f_{STÖR} \quad mit \quad m = 1,2,3,\cdots$$

liegt.

3. Messverfahren nach Anspruch 2, **dadurch gekennzeichnet, dass** eine im Impulsrückmischverfahren durch Mischung erzeugte niederfrequente Mischimpulswiederholfrequenz ($f_{MISCH}$) einem ganzzahligen Vielfachen der Triggerfrequenz ($f_{TRIGGER}$) entspricht.

4. Messverfahren nach Anspruch 3, **dadurch gekennzeichnet, dass** die Triggerfrequenz ($f_{TRIGGER}$) der niederfrequenten Mischimpulswiederholfrequenz ($f_{MISCH}$) entspricht.

## Claims

1. Handheld pulsed-laser distance-measuring device with a microcontroller (2) controlled by an algorithm (3) for calculating the distance (X) to a measured object (4) from a time difference (tau) between a measurement pulse (6) and a reference pulse (7), and with a superimposition module (5) which calculates the time difference (tau) of a number of repeated pulse-trains which are periodically superimposed with a trigger frequency (fTRIGGER), **char-**

**acterized in that**, in order to suppress an interference signal with an interfering frequency (fSTOR) of from 100 Hz to 120 Hz caused by AC-operated artificial light sources, the trigger frequency (fTRIGGER) lies in the frequency range

$$0.7 \cdot 2 / (2 \cdot m -1) \cdot fSTOR < fTRIGGER < 1.3 \cdot 2 / (2 \cdot m-1) \cdot fSTOR \text{ where } m = 1, 2, 3 \dots$$

2. Measurement method for a handheld pulse-laser distance-measuring device (1) with an algorithm (3) controlled by a microcontroller (2) for calculating the distance (X) to a measured object (4) from a time difference (tau) between a measurement pulse (6) and a reference pulse (5), wherein calculation of the distance (X) from the time difference (tau) is preceded by a superimposition step (11) that periodically superimposes a number of repeated pulse-trains with a trigger frequency (fTRIGGER), **characterized in that**, in order to suppress an interference signal with an interfering frequency (fSTOR) of from 100 Hz to 120 Hz caused by AC-operated artificial light sources, the trigger frequency (fTRIGGER) lies in the frequency range

$$0.7 \cdot 2 / (2 \cdot m -1) \cdot fSTOR < fTRIGGER < 1.3 \cdot 2 / (2 \cdot m-1) \cdot fSTOR \text{ where } m = 1, 2, 3 \dots$$

3. Measurement method according to Claim 2, **characterized in that** a low-frequency mixed-pulse repetition frequency (fMISCH) generated in the inverse pulse-mixing process is equal to an integer multiple of the trigger frequency (fTRIGGER).

4. Measurement method according to Claim 3, **characterized in that** the trigger frequency (fTRIGGER) is equal to the low-frequency mixed-pulse repetition frequency (fMISCH).

**Revendications**

1. Dispositif portatif de mesure de distance à laser par impulsions comprenant un algorithme (3) commandant un microcontrôleur (2) pour calculer la distance (X) à un objet de mesure (4) par l'intermédiaire d'une différence de temps (T) entre une impulsion de mesure (6) et une impulsion de référence (7) et comprenant un module de superposition (5) qui calcule la différence de temps (T) entre plusieurs suites d'impulsions répétées, lesquelles sont périodiquement superposées par une fréquence de déclenchement ($f_{TRIGGER}$), **caractérisé en ce que**, pour supprimer un signal parasite dû à des sources lumineuses artificielles fonctionnant sur courant alternatif à une fréquence parasite ($F_{STÖR}$) de 100 Hz à 120 Hz, la fréquence de déclenchement ($f_{TRIGGER}$) se trouve dans la gamme de fréquences

$$0{,}7 \cdot \frac{2}{2 \cdot m - 1} \cdot f_{STÖR} < f_{TRIGGER} < 1{,}3 \cdot \frac{2}{2 \cdot m - 1} \cdot f_{STÖR} \text{ avec } m = 1, 2, 3, \dots$$

2. Procédé de mesure pour un dispositif portatif de mesure de distance à laser par impulsions (1) comprenant un algorithme (3) commandant un microcontrôleur (2) pour calculer la distance (X) à un objet de mesure (4) par l'intermédiaire d'une différence de temps (T) entre une impulsion de mesure (6) et une impulsion de référence (5), dans l'étape précédant le calcul de la distance (X) à partir de la différence de temps étant prévue une étape de superposition (11) qui superpose périodiquement plusieurs suites d'impulsions répétées avec une fréquence de déclenchement ($f_{TRIGGER}$), **caractérisé en ce que**, pour supprimer un signal parasite dû à des sources lumineuses artificielles fonctionnant sur courant alternatif à une fréquence parasite ($F_{STÖR}$) de 100 Hz à 120 Hz, la fréquence de déclenchement ($f_{TRIGGER}$) se trouve dans la gamme de fréquences

$$0{,}7 \cdot \frac{2}{2 \cdot m - 1} \cdot f_{STÖR} < f_{TRIGGER} < 1{,}3 \cdot \frac{2}{2 \cdot m - 1} \cdot f_{STÖR} \text{ avec } m = 1, 2, 3, \ldots$$

**3.** Procédé de mesure selon la revendication 2, **caractérisé en ce qu'**une basse fréquence de répétition d'impulsions mixtes ($f_{MISCH}$) générée par mélange lors du procédé de rétromélange d'impulsions correspond à un multiple entier de la fréquence de déclenchement ($f_{TRIGGER}$).

**4.** Procédé de mesure selon la revendication 3, **caractérisé en ce que** la fréquence de déclenchement ($f_{TRIGGER}$) correspond à la basse fréquence de répétition d'impulsions mixtes ($f_{MISCH}$).

$$|f - f_{LO}| = f_{MISCH}$$

$$y(t) \quad \underline{9}$$

11

12

$$ADU[y_i(t-t_i) + y_{i+1}(t-t_{i+1})]$$

$$\underline{5}$$

$$\tau \implies X \quad \underline{10}$$

$$\underline{3}$$

$$\mu C \qquad \underline{2}$$

1

*Fig. 1*

*Fig. 2*

y

7

6

13

7

6

$t_i$

$1/f_{TRIGGER}$

$t_{i+1}$

t

+

$\Sigma y$

$\tau$

$1/f_{TRIGGER}$

7

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2731522
- US 4553836 A
- DE 3103567 C2
- DE 3429062 C2
- DE 10112833 C1